# EUROPÄISCHE PATENTANMELDUNG

(11) **EP 4 755 573 A1**
(43) Veröffentlichungstag der Anmeldung: **10.06.2026**
(21) Anmeldenummer: 24217504.0
(22) Anmeldetag: 04.12.2024
(51) Int. Cl.: B23Q 1/70, B23Q 11/00

(54) **SPINDEL MIT DÄMPFENDEM LAGERFLANSCH**

(71) Anmelder: Innomotics GmbH, 90441 Nürnberg (DE)
(72) Erfinder: Butz, Felix, 97421 Schweinfurt (DE); Helbig, Michael, 96106 Ebern (DE)
(74) Vertreter: Michalski Hüttermann & Partner mbB

(57) **Zusammenfassung**

Bei einer Werkzeugmaschine (2) mit einer Werkzeug- und/oder Werkstückspindel sollen Ratterschwingungen reduziert oder vermieden werden. Hierzu umfasst die Spindel (10, 30) wenigstens ein Spindelgehäuse (32), ein Spindellager (33, 34) und einen Lagerflansch (35) zur Aufnahme des Spindellagers (33, 34) und zur Befestigung an dem Spindelgehäuse (32), wobei der Lagerflansch (35) wenigstens ein Lageraufnahmeteil (36) zur Aufnahme des Spindellagers (33, 34) und ein Befestigungsteil (37) zur Befestigung des Lagerflansches (35) an dem Spindelgehäuse (32) aufweist und wobei das Lageraufnahmeteil (36) und das Befestigungsteil (37) durch wenigstens ein elastisch verformbares Verbindungsmittel (38) elastisch miteinander verbunden sind. Durch die elastische Verbindung des Lageraufnahmeteils (36) und das Befestigungsteils (37) werden Ratterschwingungen mittels der Spindel (10, 30) reduziert oder vermieden.

## Beschreibung

Die Erfindung betrifft eine Spindel, insbesondere Werkzeug- und/oder Werkstückspindel, umfassend wenigstens ein Spindelgehäuse, ein Spindellager und einen Lagerflansch zur Aufnahme des Spindellagers und zur Befestigung an dem Spindelgehäuse, wobei der Lagerflansch wenigstens ein Lageraufnahmeteil zur Aufnahme des Spindellagers und ein Befestigungsteil zur Befestigung des Lagerflansches an dem Spindelgehäuse aufweist.

Weiterhin betrifft die Erfindung einen Lagerflansch für eine Spindel, insbesondere eine Werkzeug- oder Werkstückspindel, umfassend wenigstens ein Lageraufnahmeteil zur Aufnahme des Spindellagers und ein Befestigungsteil zur Befestigung des Lagerflansches an einem Spindelgehäuse.

Ferner betrifft die Erfindung eine Maschine, insbesondere eine Werkzeugmaschine oder einen Roboter.

Darüber hinaus betrifft die Erfindung einen digitalen Zwilling einer Spindel, insbesondere Werkzeug- und/oder Werkstückspindel, umfassend wenigstens ein Spindelgehäuse, ein Spindellager und einen Lagerflansch zur Aufnahme des Spindellagers und zur Befestigung an dem Spindelgehäuse, wobei der Lagerflansch wenigstens ein Lageraufnahmeteil zur Aufnahme des Spindellagers und ein Befestigungsteil zur Befestigung des Lagerflansches an dem Spindelgehäuse aufweist.

Bei vielen Maschinen kommen zur Bewegung oder Befestigung von Teilen Spindeln zum Einsatz. Zum Beispiel werden bei einer Werkzeugmaschine Werkzeuge oder Werkstücke an einer Werkzeug- oder Werkstückspindel befestigt und angetrieben. Bei der zerspanenden Metallbearbeitung mittels einer Werkzeugmaschine entstehen zum Teil so große Kräfte, dass Schäden an dem Werkzeug oder der Maschine, insbesondere der Hauptspindel, entstehen können oder die Standzeit der verwendeten Werkzeuge reduziert wird.

Eine Spindel, insbesondere eine Werkzeug- oder eine Werkstückspindel, ist ein zentrales Bauteil in Werkzeugmaschinen wie Drehmaschinen, Fräsmaschinen und Bohrmaschinen. Sie dient dazu, das Werkzeug bzw. Werkstück zu halten und in Rotation zu versetzen, um das Werkstück mittels des Werkzeugs zu bearbeiten.

Eine Spindel umfasst mehrere wesentliche Komponenten, die zusammenarbeiten, um eine präzise und effiziente Bearbeitung des Werkstücks zu ermöglichen. Übliche Komponenten sind:
- Ein (Spindel-) Gehäuse.
- Lager: Diese halten die Spindelwelle in Position und reduzieren die Reibung während der Rotation. Präzisionslager sind besonders wichtig, da sie hohe Drehzahlen und Belastungen aushalten müssen. Üblicherweise werden Wälzlager, insbesondere Kugellager, verwendet.
- Lagerflansche: Diese dienen zur Befestigung der Lager an dem Gehäuse.
- Eine Spindelwelle: Sie überträgt die Kraft des Motors auf das Werkzeug und muss extrem präzise gefertigt sein, um Vibrationen zu minimieren und eine hohe Genauigkeit zu gewährleisten.
- Eine Motor- bzw. Antriebseinheit: Diese treibt die Spindelwelle an. Es gibt verschiedene Motorenarten, wie Direktantriebsmotoren oder Riemenantriebssysteme, die je nach Anwendungsbereich eingesetzt werden.
- Kühl- und Schmierungssysteme: Diese sind essenziell, um die Wärmeentwicklung in der Spindel zu kontrollieren und die Lebensdauer der Spindel zu erhöhen.
- Eine Werkzeug- oder Werkstückaufnahme: Dies ist das Verbindungselement zwischen der Spindel und dem Werkzeug bzw. Werkstück. Sie muss sehr stabil und präzise sein, um das Werkzeug bzw. Werkstück sicher zu fixieren und hohe Drehzahlen zu ermöglichen.

Im Zusammenhang mit der Bearbeitung eines Werkstücks mittels einer Werkzeugmaschine versteht man unter Rattereffekten bzw. Ratterschwingungen bzw. kurz "Rattern" unerwünschte Vibrationen, die während des Bearbeitungsprozesses auftreten. Diese Vibrationen können durch verschiedene Faktoren verursacht werden und haben erhebliche Auswirkungen auf die Qualität des bearbeiteten Werkstücks sowie auf die Lebensdauer der Werkzeuge und Maschinen.

### Man unterscheidet zwei Hauptarten von Rattern:

Regeneratives Rattern: Dies sind selbsterregte Schwingungen, die durch die Wechselwirkung zwischen dem Werkzeug und dem Werkstück entstehen. Wenn das Werkzeug auf das Werkstück trifft, erzeugt es Wellen auf der Oberfläche, die beim nächsten Schnitt wieder aufgenommen werden und zu verstärkten Schwingungen führen. Dies kann zu einer schlechten Oberflächenqualität, erhöhtem Werkzeugverschleiß und sogar zu Schäden an der Maschine führen.

Nicht-regeneratives Rattern: Diese Schwingungen werden durch externe Einflüsse wie Unwuchten, Lagerfehler oder äußere Vibrationen verursacht. Sie sind nicht das Ergebnis der Wechselwirkung zwischen Werkzeug und Werkstück, sondern werden von äußeren Faktoren erzwungen.

Regeneratives Rattern beim Fräsen bezieht sich auf ein unerwünschtes Schwingungsverhalten, das während des Fräsprozesses auftreten kann. Es handelt sich dabei um eine Art von selbsterregten Schwingungen, die beim Schneideneingriff durch Wechselwirkungen zwischen dem Fräswerkzeug, dem Werkstück und der Maschine entsteht. Ursachen hierfür liegen meistens in einer Kombination aus den dynamischen Eigenschaften (Resonanzen) der Maschine und Prozessparametern wie Schnittgeschwindigkeit, Schnitttiefe, Vorschubgeschwindigkeit sowie Werkzeuggeometrie. Das Rattern kann dazu führen, dass die Fräsqualität leidet, die Werkzeugstandzeit verkürzt wird und die Bearbeitungseffizienz verringert wird.

Um Rattereffekte (Rattern) zu vermeiden bzw. zu verringern werden Schnittparameter iterativ - häufig mit einer großen Anzahl an Iterationsschleifen - experimentell für den speziellen Bearbeitungsvorgang ermittelt. Eine weitere, aufwendige Methode ist die systematische Anfertigung von sogenannten Ratterkarten, bei welchen das dynamische Verhalten der Maschine zur Identifikation stabiler Bearbeitungsbereiche experimentell ermittelt wird. Beide Maßnahmen sind sehr aufwendig und aufgrund der gegebenen Werkzeugabhängigkeit wiederholt durchzuführen. Es gilt den Punkt zu ermitteln, ab dem der Prozess instabil wird bzw. bei dem der Prozess gerade noch stabil ist.

Eine weitere Möglichkeit zur Verringerung von Ratterschwingungen (Rattern) ist der Einsatz von Dämpfungssystemen wie etwa dämpfenden Werkzeughaltern.

Aufgabe der vorliegenden Erfindung ist es, Rattern bei Werkzeugmaschinen auf einfache, effiziente und kostengünstige Weise zu reduzieren bzw. zu vermeiden.

Diese Aufgabe wird gelöst durch eine Spindel mit den Merkmalen gemäß Patentanspruch 1, also eine Spindel, insbesondere Werkzeug- und/oder Werkstückspindel, umfassend wenigstens ein Spindelgehäuse, ein Spindellager und einen Lagerflansch zur Aufnahme des Spindellagers und zur Befestigung an dem Spindelgehäuse, wobei der Lagerflansch wenigstens ein Lageraufnahmeteil zur Aufnahme des Spindellagers und ein Befestigungsteil zur Befestigung des Lagerflansches an dem Spindelgehäuse aufweist, wobei das Lageraufnahmeteil und das Befestigungsteil durch wenigstens ein elastisch verformbares Verbindungsmittel elastisch miteinander verbunden sind.

Die Aufgabe wird ferner gelöst durch einen Lagerflansch für eine Spindel mit den Merkmalen gemäß Patentanspruch 13, also einen Lagerflansch für eine Spindel, insbesondere eine Werkzeug- oder Werkstückspindel, umfassend wenigstens ein Lageraufnahmeteil zur Aufnahme des Spindellagers und ein Befestigungsteil zur Befestigung des Lagerflansches an einem Spindelgehäuse, wobei das Lageraufnahmeteil und das Befestigungsteil durch wenigstens ein elastisch verformbares Verbindungsmittel elastisch miteinander verbunden sind.

Weiterhin wird die Aufgabe gelöst durch eine Maschine nach Anspruch 14, also eine Maschine, insbesondere Werkzeugmaschine oder Roboter, umfassend eine Spindel nach einem der Ansprüche 1 bis 12.

Weiterhin wird die Aufgabe gelöst durch einen digitalen Zwilling zur Simulation einer Spindel mit den Merkmalen gemäß Patentanspruch 15, also einen digitalen Zwilling zur Simulation einer Spindel, insbesondere Werkzeug- und/oder Werkstückspindel, umfassend eine digitale Repräsentation wenigstens eines Spindelgehäuses, eines Spindellagers und eines Lagerflansches zur Aufnahme des Spindellagers und zur Befestigung an dem Spindelgehäuse, wobei der Lagerflansch wenigstens ein Lageraufnahmeteil zur Aufnahme des Spindellagers und ein Befestigungsteil zur Befestigung des Lagerflansches an dem Spindelgehäuse aufweist, wobei das Lageraufnahmeteil und das Befestigungsteil durch wenigstens ein elastisch verformbares Verbindungsmittel elastisch miteinander verbunden sind und wobei mittels des digitalen Zwillings die elastische Verformung des elastisch verformbaren Verbindungsmittels in Folge einer (ebenfalls simulierten) auf die Spindel einwirkenden äußeren Kraft simulierbar ist.

Bisher wurden Spindeln für Werkzeugmaschinen (Werkzeugspindeln, Werkstückspindeln) insgesamt möglichst steif ausgeführt, um eine möglichst hohe Positioniergenauigkeit des Werkzeugs und/oder Werkstücks zu erreichen. Insbesondere wurden Lagerflansche für Spindeln so ausgeführt, dass das Lageraufnahmeteil zur Aufnahme des Spindellagers und das Befestigungsteil zur Befestigung des Lagerflansches an dem Spindelgehäuse möglichst steif und massiv ausgeführt wurden. Eine elastische Verformung zwischen den beiden genannten Teilen des Lagerflansches war unerwünscht und zu vermeiden.

Anders hingegen bei dem erfindungsgemäßen Lagerflansch, bei dem eine gewisse Elastizität zwischen dem Lageraufnahmeteil und dem Befestigungsteil des Lagerflansches erwünscht ist. Durch die Verwendung eines speziellen Lagerflansches wird gezielt die Elastizität der Spindel erhöht bzw. die Steifigkeit reduziert, um dadurch Ratterschwingungen entgegenzuwirken.

Ein Vorteil der vorliegenden Erfindung gegenüber dämpfenden Werkzeughaltern ist, dass die Funktionalität, soll heißen die Elastizität bzw. dämpfende Wirkung, direkt in die Spindel (speziell den Lagerflansch) integriert ist, so dass nicht eine Vielzahl an Werkzeughaltern für verschiedene Werkzeuge benötigt wird.

Die erfindungsgemäße Spindel unterscheidet sich von einer herkömmlichen Spindel dadurch, dass wenigstens der Lagerflansch am vorderen (werkzeug- bzw. werkstückseitigen) Lager, welches gewöhnlich als Festlager ausgebildet ist, nicht wie bisher massiv und damit möglichst steif ist, sondern eine gewisse Elastizität aufweist. Erfindungsgemäß wird dies dadurch erreicht, dass der Lagerflansch wenigstens ein Lageraufnahmeteil zur Aufnahme des Spindellagers und ein Befestigungsteil zur Befestigung des Lagerflansches an dem Spindelgehäuse aufweist, wobei das Lageraufnahmeteil und das Befestigungsteil durch wenigstens ein elastisch verformbares Verbindungsmittel elastisch miteinander verbunden sind. Herkömmlichen Lagerflanschen für Spindeln fehlt ein derartiges elastisch verformbares Verbindungsmittel.

Im Zusammenhang mit der Erfindung hat sich bei einer Spindel, insbesondere einer Werkzeugspindel, eine um ca. 10% bis 30%, vorzugsweise 20% höhere Elastizität bzw. damit einhergehend ein um ca. 10% bis 30%, vorzugsweise 20% reduzierte Steifigkeit an der Spindelnase (=Werkzeugschnittstelle) im Vergleich zu einer herkömmlichen Spindel als besonders vorteilhaft erwiesen. Um diese Werte zu erreichen, weist der im Zusammenhang mit der Erfindung verwendeter Lagerflansch eine um einen Faktor im Bereich von 0,1 bis 0,25, vorzugsweise 0,2, niedrigere Steifigkeit gegenüber einem herkömmlich verwendeten, massiven Lagerflansch auf.

Um die gewünschte Elastizität gegenüber einem herkömmlichen Lagerflansch zu erreichen, gibt es verschieden Möglichkeiten, die wahlweise einzeln oder auch in Kombination verwirklicht werden können:
Vorzugsweise wird die elastische Verformbarkeit durch die spezielle konstruktive Ausbildung erreicht, insbesondere dadurch, dass im Bereich zwischen dem Lageraufnahmeteil und dem Befestigungsteil des Lagerflansches Material eingespart und dieser Bereich entsprechend weniger massiv und damit einhergehend weniger steif ausgebildet wird.

Eine andere Möglichkeit besteht in einer speziellen Formgebung des Verbindungsmittels. Auch bei dieser Formgebung gibt es eine Vielzahl an Möglichkeiten, um den gewünschten Effekt zu erzielen. Insbesondere kann das Verbindungsmittel zum Beispiel trichterförmig oder tellerfederförmig ausgebildet sein, um die gewünschte Nachgiebigkeit zu erreichen. Weiterhin kann das Verbindungsmittel zum Erreichen einer gewünschten Nachgiebigkeit auch ganz oder teilweise zickzackförmig, wellenförmig bzw. gewellt, spiralförmig etc. ausgebildet sein, so dass die Elastizität durch die spezielle Formgebung erreicht bzw. vergrößert wird.

Eine bevorzugte Ausführungsform der Erfindung sieht vor, dass das elastisch verformbare Verbindungsmittel wenigstens einen Stab und/oder eine Strebe, insbesondere eine Vielzahl an Stäben und/oder Streben umfasst oder als Stab und/oder Strebe, insbesondere als Vielzahl an Stäben und/oder Streben ausgebildet ist. Insbesondere durch die Anzahl, die Größenabmessungen (Dimensionierung), die Verteilung, die Ausrichtung oder die verwendeten Materialien der Stäbe oder Streben kann hier in vielfältiger Weise auf die elastischen Eigenschaften des Lagerflansches und damit der Spindel als solche eingewirkt werden. Die Stäbe oder Streben sind vorzugsweise gleichmäßig flach bzw. plattenförmig ausgebildet.

Neben Stäben und/oder Streben kommt eine Vielzahl an weiteren konstruktiven Gestaltungsmöglichkeiten in Betracht, um die beabsichtigte Verformbarkeit bzw. Elastizität des elastisch verformbaren Verbindungsmittels zu erreichen. Beispielsweise könnte dieses wenigstens im Wesentlichen auch bogenförmig, trichterförmig, tellerförmige etc. ausgebildet sein.

Zur weiteren Vergrößerung der Elastizität kann die gewählte Form des elastisch verformbaren Verbindungsmittels zumindest abschnittsweise auch zickzackförmig, wellenförmig bzw. gewellt, spiralförmig etc. ausgebildet sein.

Das Lageraufnahmeteil, das Befestigungsteil und das elastisch verformbare Verbindungsmittel sind vorzugsweise einstückig ausgebildet und in einem Arbeitsgang hergestellt, z.B. einem Metallguss- oder einem 3D-Druck-Verfahren. Verzugsweise bestehen die drei Teile aus demselben Material. Die genannten Maßnahmen ermöglichen jeweils eine einfache und kostengünstige Herstellung bei guten mechanischen Eigenschaften.

Vorzugsweise sind die Stäbe oder Streben, die das Lageraufnahmeteil und das Befestigungsteil miteinander verbinden, gleichmäßig über den Umfang des Lagerflansches verteilt. Insbesondere sind genau vier oder vielfache von vier, gleichmäßig über den Umfang des Lagerflansches verteilte Stäbe oder Streben vorhanden, so dass der Lagerflansch Kräfte in beliebiger radialer Richtung aufnehmen und dämpfen kann.

Bei einer bevorzugten Ausführungsform der Erfindung ist das elastisch verformbare Verbindungsmittel bezüglich eines Querschnitts um einen Winkel im Bereich von 30° bis 60°, insbesondere 45°, gegenüber einer Spindelachse (Spindellängsachse) geneigt. Insbesondere sind bei einer Ausgestaltung des elastisch verformbaren Verbindungsmittels in Form einer Anzahl an Stäben und/oder Streben die Stäbe bzw. Streben um einen Winkel im Bereich zwischen 30° und 60°, insbesondere 45°, gegenüber der Spindelachse geneigt. Dadurch wird sowohl in axialer als auch in radialer Richtung eine hohe und insbesondere in beiden Richtungen zumindest näherungsweise gleiche Elastizität erreicht.

Die gewünschte elastische Verformbarkeit kann auch oder zusätzlich durch besondere Materialeigenschaften des elastisch verformbares Verbindungsmittels gegenüber dem Lageraufnahmeteil und dem Befestigungsteil erreicht werden. Für das elastisch verformbare Verbindungsmittel würde dazu eine andere Materialzusammensetzung, insbesondere ein "weicheres" Material gewählt werden als für die übrigen Teile des Lagerflansches.

Bei einer Ausführungsform der Erfindung ist der Lagerflansch in einem 3D-Druck-Verfahren hergestellt. Dadurch sind auch komplizierte Formen des elastisch verformbare Verbindungsmittels, z.B. in Form einer Anzahl an gewellten oder gebogenen Streben, aber auch unterschiedliche Materialzusammensetzungen in unterschiedlichen Bereichen, in einfacher Weise herstellbar.

Bei einer Ausführungsform der Erfindung weist der Lagerflansch wenigstens einen Kühlkanal, insbesondere eine Vielzahl an Kühlkanälen, zur Durchleitung eines Kühlmediums zur Kühlung des Lagerflansches und insbesondere des Spindellagers auf. Auch diese Variante ist vorteilhaft mittels 3D-Druck herstellbar.

Bei einer Ausführungsform der Erfindung weist der Lagerflansch, insbesondere das elastisch verformbare Verbindungsmittel, wenigstens einen mit einem Dämpfungsmittel füllbaren bzw. gefüllten Hohlraum auf. Zusätzlich zu den elastischen Eigenschaften hat der Lagerflansch somit auch eine dämpfende Wirkung, was zusätzlich zur Unterdrückung von Ratterschwingungen beiträgt.

Um die elastische Verformbarkeit des erfindungsgemäßen Lagerflansches wenigstens im Wesentlichen auf ein bestimmtes Maximum zu begrenzen, sieht eine bevorzugte Ausführungsform der Spindel bzw. des Lagerflansches wenigstens ein Anschlagelement zur Begrenzung der elastischen Verformung des Lagerflansches vor.

Vorteilhaft kann ferner zwischen dem Lagerflansch und dem Anschlag ein Dämpfungselement vorhanden sein, welches eine dämpfende Wirkung bei der elastischen Verformung des Lagerflansches bewirkt. Vorzugsweise umfasst das Anschlagelement das Dämpfungselement, beispielsweise indem das Anschlagelement und das Dämpfungselement mittels 3D-Druck einstückig ausgebildet sind, oder das Dämpfungselement ist mit dem Anschlagelement verbunden, z.B. verklebt.

Weiterhin erlaubt die elastische Verformung eine relativ einfache und kostengünstige Bestimmung der Kräfte, die auf den Lagerflansch einwirken. Dadurch dass die elastische Verformung des Lagerflansches wenigstens im Wesentlichen auf einen bestimmten Bereich des Lagerflansches, nämlich das elastisch verformbare Verbindungsmittel, beschränkt ist, lässt sich die Verformung in eben diesem Bereich besonders gut und einfach mit wenigstens einem Sensorelement messen.

So weist bei einer vorteilhaften Ausführungsform der Erfindung das elastisch verformbare Verbindungsmittel wenigstens ein Sensorelement, insbesondere einen Dehnungsmessstreifen, zum Bestimmen einer elastischen Verformung des elastisch verformbaren Verbindungsmittels auf.

Als Sensorelement kommen insbesondere Dehnmessstreifen in Betracht. Diese sind in vielfältigen Ausführungsformen und insbesondere kostengünstig am Markt verfügbar. Auch die Anbringung der Dehnmessstreifen an der Oberfläche der Stäbe bzw. Streben gestaltet sich sehr einfach, z.B. durch Verkleben. Die Einbringung von Sensorelementen in die Stäbe oder Streben, z.B. durch Verguss, ist ebenfalls möglich, aber eine entsprechend aufwändigere und teurere Alternative.

Die Erfindung ist jedoch nicht auf die Verwendung von Dehnmessstreifen beschränkt. Prinzipiell können auch andere Sensorelemente zum Bestimmen einer Dehnung oder Stauchung des wenigstens einen elastischen Verbindungselements verwendet werden, z.B. Wegsensoren oder Lichtleitfasern.

Vorteilhaft ist das elastisch verformbare Verbindungsmittel derart ausgestaltet, dass daran wenigstens vier Sensorelemente jeweils um 90° versetzt bezüglich der Spindelachse an dem Lagerflansch angeordnet werden können. Durch diese Anordnung der Sensorelemente kann auch die Richtung, mit der eine äußere Kraft auf den Lagerflansch einwirkt, gut bestimmt werden.

Bei einer Ausführungsform der Erfindung ist die Spindel als Motorspindel ausgebildet und der Lagerflansch ist somit als Lagerschild der Motorspindel ausgebildet. Der Lagerschild ist dabei als spezielle Ausführungsform eines erfindungsgemäßen Lagerflansches anzusehen, der neben den bereits genannten Aufgaben eines Lagerflansches auch die Funktion als Deckel für den Elektromotor der Motorspindel einschließt. Diese Ausführungsform ist besonders kompakt, da die Spindelwelle gleichermaßen die Motorwelle ist. Auch bei dieser Verwendung kommen die bereits genannten Vorteile der Erfindung zum Tragen.

Vorteilhaft ist eine erfindungsgemäße Maschine dadurch gekennzeichnet, dass sie eine erfindungsgemäße Spindel umfasst. Die erfindungsgemäße Maschine ist vorzugsweise als Werkzeugmaschine bzw. Roboter ausgebildet und die Spindel ist mit einem Werkzeug verbindbar und die Bewegung des Werkzeugs ist derart steuerbar, dass damit eine beabsichtigte Be- und/oder Verarbeitung oder Herstellung eines Werkstücks erfolgt. Bei einem erfindungsgemäßen Roboter ist die erfindungsgemäße Spindel am vorderen Ende des Roboterarms bzw. Manipulators angebracht.

Heute ist es üblich, vor der realen Bearbeitung eines Werkstücks mittels einer Werkzeugmaschine die Bearbeitung zunächst zu simulieren. Hierfür wird ein digitaler Zwilling der Werkzeugmaschine verwendet. Die Simulation ist umso besser und stimmt umso genauer mit dem realen Verhalten der Maschine überein, je mehr Details der Maschine in Form entsprechender digitaler Zwillinge mit in die Simulation einbezogen werden. Daher ist es vorteilhaft, auch für die erfindungsgemäße Spindel mit einem erfindungsgemäßen Lagerflansch einen digitalen Zwilling der Spindel bzw. des Lagerflansches bereitzustellen. Dadurch können auch die Eigenschaften der Spindel bzw. des Lagerflansches mit in die Simulation einbezogen werden, wodurch diese noch genauer und realitätsnäher wird. Insbesondere können so bereits vor der realen Bearbeitung die Gefahr von Ratterschwingungen erkannt und geeignete Gegenmaßnahmen zu deren Vermeidung getroffen werden. Ferner ist es möglich, auf Basis der in der Simulation gewonnenen Erkenntnisse die vorgesehene Spindel bzw. deren Lagerflansch ggf. zu optimieren oder für eine bestimmte Anwendung die am besten für diese Anwendung geeignete Spindel aus mehreren verschiedenen Spindeln auszuwählen.

Um einen digitalen Zwilling von mechanischen Komponenten einer Werkzeugmaschine wie der Spindel zu erstellen, gibt es mehrere übliche Methoden und Technologien, die zum Einsatz kommen können. Diese Methoden ermöglichen es, eine genaue digitale Nachbildung der physischen Komponenten, insbesondere (auch) der Spindel zu erstellen, um Simulationen der Funktion der Werkzeugmaschine durchzuführen. Hier sind einige der gängigen Ansätze:
CAD-Modelle (Computer-Aided Design):
   CAD-Software wird verwendet, um detaillierte 3D-Modelle der mechanischen Komponenten zu erstellen. Diese Modelle umfassen alle geometrischen und strukturellen Details, die notwendig sind, um die physische Komponente digital zu repräsentieren.
Finite-Elemente-Methode (FEM):
   Die Finite-Elemente-Methode wird verwendet, um die physikalischen Eigenschaften und das Verhalten der mechanischen Komponenten unter verschiedenen Betriebsbedingungen zu simulieren. FEM-Analysen helfen, Spannungen, Verformungen und andere mechanische Phänomene zu untersuchen.
Computational Fluid Dynamics (CFD):
   Für Komponenten, bei denen die Strömungsmechanik eine Rolle spielt, wird CFD verwendet, um das Verhalten von Flüssigkeiten und Gasen zu simulieren. Dies ist besonders wichtig für Kühlsysteme oder pneumatische Systeme in Werkzeugmaschinen.
Sensorintegration und Datenerfassung:
   Sensoren werden an den physischen Komponenten der Werkzeugmaschine installiert, um Echtzeitdaten zu erfassen. Diese Daten werden dann verwendet, um den digitalen Zwilling mit aktuellen Betriebsbedingungen und Leistungsmetriken zu versorgen.
Physikbasierte Modellierung:
   Physikbasierte Modelle werden entwickelt, um die dynamischen Eigenschaften und das Verhalten der mechanischen Komponenten zu simulieren. Diese Modelle basieren auf physikalischen Gesetzen und Gleichungen, die das Verhalten der Komponenten beschreiben.
Maschinelles Lernen und Kl:
   Maschinelles Lernen und KI-Algorithmen werden verwendet, um aus großen Datenmengen zu lernen und präzise Modelle des Verhaltens der Komponenten zu erstellen. Diese Modelle können verwendet werden, um zukünftige Zustände vorherzusagen und präventive Wartungsstrategien zu entwickeln.
Virtuelle Inbetriebnahme:
   Virtuelle Inbetriebnahme-Software ermöglicht es, den digitalen Zwilling der Werkzeugmaschine in einer virtuellen Umgebung zu testen und zu optimieren, bevor die physische Maschine in Betrieb genommen wird. Dies hilft, Fehler zu identifizieren und zu beheben, bevor sie in der realen Welt auftreten.
Kinematische und dynamische Simulation:
   Kinematische und dynamische Simulationen werden durchgeführt, um die Bewegungen und Wechselwirkungen zwischen den mechanischen Komponenten zu analysieren. Diese Simulationen helfen, die Leistung und Effizienz der Werkzeugmaschine zu verbessern.

Durch die Kombination dieser Methoden und Technologien können Ingenieure und Entwickler einen umfassenden und genauen digitalen Zwilling der Werkzeugmaschine bzw. deren Komponenten erstellen. Dieser digitale Zwilling ermöglicht es, die Funktion einzelner Bauelemente der Maschine bzw. die Maschine als Ganzes zu simulieren, zu analysieren und zu optimieren, was letztendlich die Effizienz und Zuverlässigkeit der Maschine verbessert.

Der digitale Zwilling kann vorteilhaft bei der Konstruktion einer erfindungsgemäßen Spindel verwendet werden, z.B. indem vorab virtuell getestet werden kann, wie sich bestimmte konstruktive Maßnahmen wie etwa die Anzahl, Anordnung oder Dimensionierung der Streben des Lagerflansches auf die Elastizität des Lagerflansches bzw. der Spindel auswirken. Der digitale Zwilling kann aber vorteilhaft auch dazu verwendet werden, das Verhalten einer bestimmten erfindungsgemäßen Spindel in der Maschine, etwa bei der Bearbeitung eines Werkstücks, vorab zu simulieren und zu testen.

Die Erfindung wird nachfolgend anhand von Ausführungsbeispielen exemplarisch näher beschrieben und erläutert. Dabei zeigen:
- FIG 1: Eine Werkzeugmaschine mit einer Werkzeugspindel,
- FIG 2: eine Schnittdarstellung einer herkömmlichen Motorspindel,
- FIG 3: eine Schnittdarstellung einer erfindungsgemäßen Motorspindel,
- FIG 4: eine Verkippung der Spindelwelle in Verbindung mit einem herkömmlichen Motorspindel,
- FIG 5: eine Verkippung der Spindelwelle in Verbindung mit einem erfindungsgemäßen Motorspindel,
- FIG 6: einen Lagerschild einer erfindungsgemäßen Motorspindel in räumlicher Ansicht,
- FIG 7: eine bevorzugte Ausführungsform eines erfindungsgemäßen Lagerschildes.

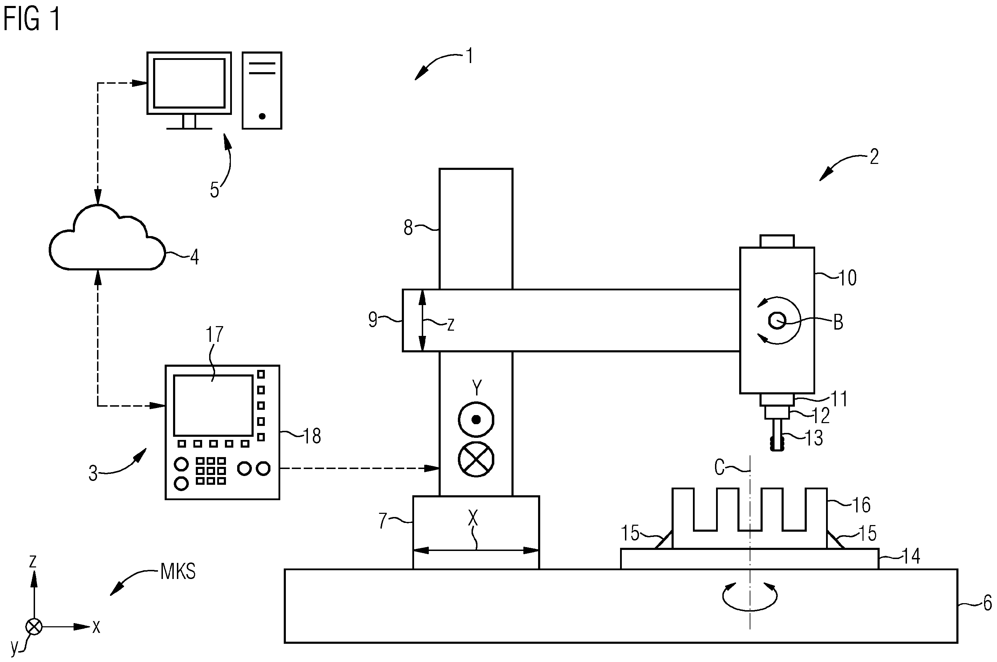

In FIG 1 ist schematisiert ein Bearbeitungsmaschinensystem in Form eines Werkzeugmaschinensystems 1 dargestellt. Das Werkzeugmaschinensystem 1 umfasst eine Bearbeitungsmaschine in Form einer Werkzeugmaschine 2. Ferner umfasst das Werkzeugmaschinensystem 1 eine mit der Werkzeugmaschine 2 verbundene numerische Steuereinrichtung in Form einer CNC-Steuerung 3 zur Steuerung der Werkzeugmaschine 2. Darüber hinaus umfasst das Werkzeugmaschinensystem 1 eine über ein Netzwerk 4, zum Beispiel das Internet, verbundene externe Recheneinrichtung in Form eines CAD/CAM-Systems 5.

Die dargestellte Werkzeugmaschine 2 verfügt über 3 lagegeregelte Linearachsen X, Y und Z, wobei ein erstes Tragelement 7 in x-Richtung, ein zweites Tragelement 8 in y-Richtung und ein drittes Tragelement 9 in z-Richtung bezüglich eines bezüglich der Werkzeugmaschine 2 ortsfesten Maschinenkoordinatensystems MKS verstellbar ist.

Das erste Tragelement 7 ist über einen in x-Richtung verstellbaren Linearantrieb (nicht dargestellt) mit einem ruhenden Maschinengestellt 6 verbunden, das zweite Tragelement 8 ist über einen in y-Richtung verstellbaren Linearantrieb (nicht dargestellt) mit dem ersten Tragelement 7 verbunden und das dritte Tragelement 9 ist über einen in z-Richtung verstellbaren Linearantrieb (nicht dargestellt) mit dem zweiten Tragelement 8 verbunden.

Das dritte Tragelement 9 trägt eine Motorspindel 10, die um eine zur Y-Achse parallele, lagegeregelte Rundachse B schwenkbar ist. Die Motorspindel 10 weist ihrerseits eine um eine Spindelachse (nicht dargestellt) rotierbare, drehzahl- und/oder lagegeregelte Spindel- bzw. Motorwelle 11 auf, an deren vorderem Ende ein Werkzeughalter 12 mit dem daran befestigten Werkzeug 13 eingespannt ist.

Weiterhin umfasst die Werkzeugmaschine 2 eine um eine parallel zur Z-Achse ausgerichtete, lagegeregelte Werkzeugtischachse C, um die ein Werkstücktisch 14 rotierbar ist.

Der Werkzeugtisch 14 ist ebenfalls mit dem ruhenden Maschinengestellt 6 verbunden und an dem Werkzeugtisch 14 ist mittels der Werkzeughalter 15 ein Werkstück 16 befestigt.

Die Werkzeugmaschine 2 verfügt im Rahmen des Ausführungsbeispiels demnach über fünf lagegeregelte Maschinenachsen, durch die eine Relativbewegung zwischen dem Werkzeug 13, das im Rahmen des Ausführungsbeispiels in Form eines Fräsers vorliegt, und dem Werkstück 16 durchgeführt werden kann. Es handelt sich somit um eine sogenannte 5-achsige Werkzeugmaschine (5-Achs-Maschine), wobei an dieser Stelle angemerkt sei, dass eine Werkzeugmaschine selbstverständlich auch noch mehr, aber auch weniger als fünf Maschinenachsen aufweisen kann. Die Antriebe der lagegeregelten Maschinenachsen wurden wegen der besseren Übersichtlichkeit im Ausführungsbeispiel nicht dargestellt.

Die Werkzeugmaschine 2 ist mit der CNC-Steuerung 3 verbunden, die anhand eines Teileprogramms und/oder einer Handbedieneingabe Bewegungssollwerte für die Maschinenachsen zur Steuerung einer zwischen dem Werkzeug 13 und dem Werkstück 16 stattfindenden Relativbewegung ermittelt. Die CNC-Steuerung 3 ermittelt die Bewegungssollwerte insbesondere anhand des Teileprogramms, in dem die von dem Werkzeug 13 relativ zu dem Werkstück 16 durchzuführenden Bewegungen in Form von Befehlen bzw. Programmanweisungen, in der Regel in Form von G-Code, definiert sind.

Alternativ oder zusätzlich kann die Bewegung des Werkzeugs 13 und/oder das Werkstücks 16 auch mittels einer Handbedieneingabe über eine Bedieneinrichtung mit Bedienelementen 18 in Verbindung mit einer Anzeigevorrichtung in Form eines Displays 17 der CNC-Steuerung 3 von einem Bediener vor Ort an der Werkzeugmaschine 2 vorgegeben werden. Die Bedienelemente 18 umfassen insbesondere Taster, oder Drehregler. Vorteilhaft kann das Display 17 auch als Touchscreen und damit ebenfalls als Bedienelement ausgeführt sein.

Das Teileprogramm wird üblicherweise in einer aus Sicht der CNC-Steuerung externen Recheneinrichtung, im Ausführungsbeispiel dem CAD/CAM-System 5 und einem eventuell dem CAD/CAM-System nachgeschalteten sogenannten Postprozessor (nicht dargestellt) außerhalb der CNC-Steuerung 3 erzeugt und von dort, insbesondere über das Netzwerk 4, auf die CNC-Steuerung 3 übertragen.

Bei dem Ausführungsbeispiel gemäß FIG 1 sind die CNC-Steuerung 3 und/oder die externe Recheneinrichtung 5 dazu eingerichtet, eine reale Bearbeitung des Werkstücks 16 mittels der Werkzeugmaschine 2 zunächst zu simulieren. Hierfür sind digitale Repräsentationen wenigstens aller wesentlichen Komponenten der Werkzeugmaschine 2, des Werkzeugs 13 sowie des Werkstücks 16 in der CNC-Steuerung 3 bzw. der externen Recheneinrichtung 5 hinterlegt. Zur Simulation führt die CNC-Steuerung 3 bzw. die externen Recheneinrichtung 5 insbesondere dasselbe Teileprogramm aus, das auch bei der realen Bearbeitung durch die CNC-Steuerung 3 ausgeführt wird. Die simulierte Bearbeitung kann auf dem Display 17 der CNC-Steuerung 3 und/oder einem Display der externen Recheneinrichtung 5 visuell veranschaulicht werden.

Vorteilhaft ist bei dem Ausführungsbeispiel nach FIG 1 die Werkzeugspindel 10 in Form einer erfindungsgemäßen Spindel ausgeführt, die einen erfindungsgemäßen Lagerflansch (aus FIG 1 nicht ersichtlich) umfasst.

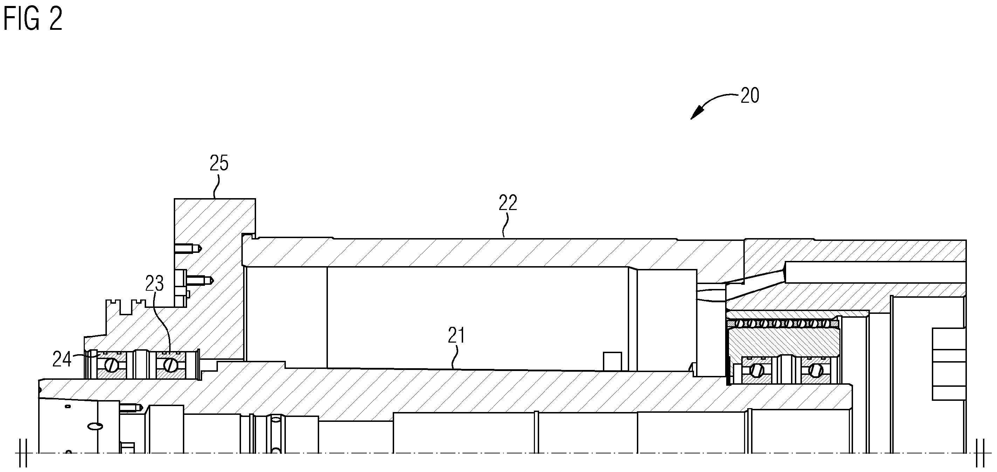

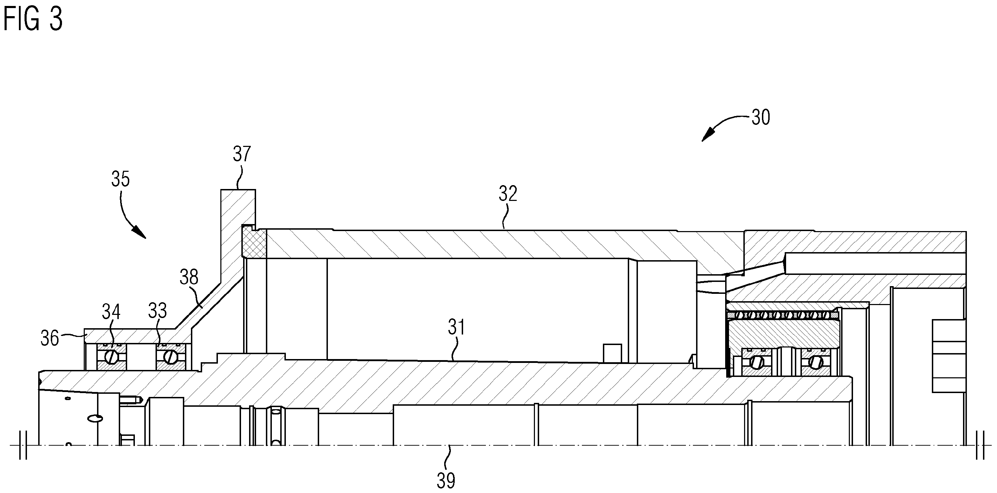

FIG 2 zeigt eine Schnittdarstellung einer herkömmlichen Motorspindel 20. Daraus ersichtlich sind insbesondere eine Spindelwelle bzw. Motorwelle 21, ein Gehäuse (Spindelgehäuse) 22, Wälzlager 23 und 24 sowie ein Lagerflansch 25 zur Befestigung und Fixierung der Wälzlager 23 und 24. Wie aus der Figur weiterhin ersichtlich ist, ist der Lagerflansch 25 massiv ausgeführt und weist daher eine hohe Steifigkeit auf. Auf Details des Motors, die für die Erfindung unerheblich sind, wurde zugunsten der besseren Übersichtlichkeit in den Figuren (insbesondere FIG 2 und FIG 3) verzichtet.

FIG 3 zeigt im Unterschied zu FIG 2 eine Schnittdarstellung einer erfindungsgemäßen Motorspindel 30, die eine Spindelwelle bzw. Motorwelle 31, ein Gehäuse 32 sowie die beiden Wälzlager 33 und 34 umfasst. Ferner ist ein Lagerflansch 35 ersichtlich, der auch hier zur Befestigung und Fixierung von Wälzlagern 33 und 34 dient, sich im Aufbau jedoch grundlegend von dem aus FIG 2 ersichtlichen Lagerflansch 25 unterscheidet. Ergänzend wird noch darauf hingewiesen, dass - anders als in den FIG 2 und 3 dargestellt - anstatt der beiden Spindellager bzw. Wälzlager 33 und 34 auch Ausführungsformen mit lediglich einem Lager, z.B. dem Lager 33, in diesem Bereich der Spindel üblich und von der Erfindung umfasst sind.

Auch der Lagerflansch 35 dient zur Aufnahme der Spindellager 33, 34 und zur Befestigung an dem Spindelgehäuse. Im Unterschied zu dem Lagerflansch 25 lässt sich der Lagerflansch 35 in wenigstens 3 funktional unterschiedliche Bereiche unterteilen: ein Lageraufnahmeteil 36 zur Aufnahme der Spindellager 33, 34, ein Befestigungsteil 37 zur Befestigung des Lagerflansches 35 an dem Spindelgehäuse 32 sowie ein elastisch verformbares Verbindungsmittel 38, durch welches das Lageraufnahmeteil 36 und das Befestigungsteil 37 elastisch miteinander verbunden sind.

Das elastisch verformbare Verbindungsmittel 38 ist im Ausführungsbeispiel als Anzahl an Streben 38 ausgeführt, die jeweils um einen Winkel von ca. 45° gegenüber einer Spindelachse 39 geneigt sind.

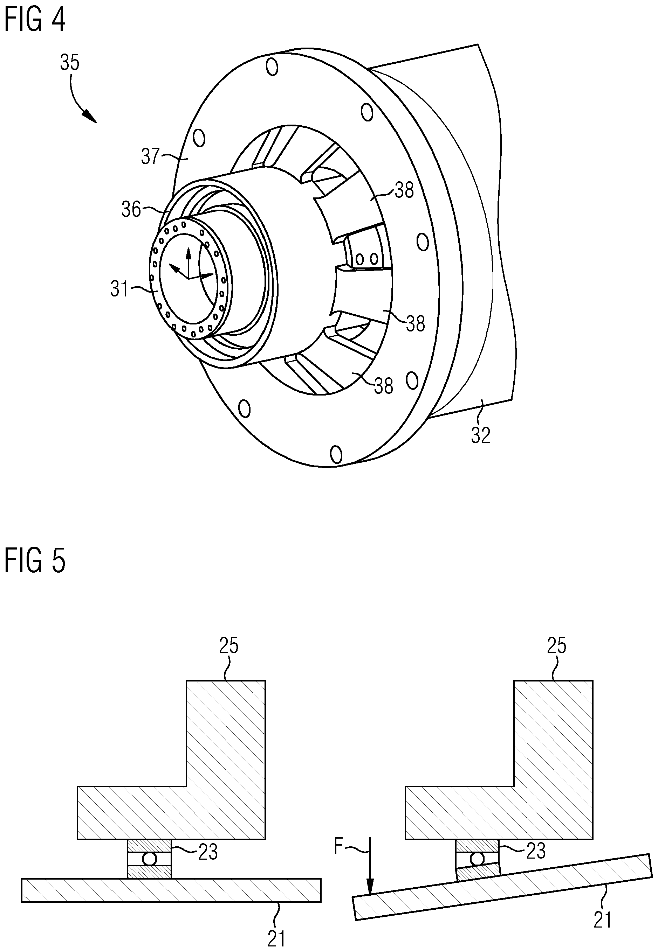

Zur besseren Veranschaulichung sind der Lagerflansch 35 mit dem Lageraufnahmeteil 36, dem Befestigungsteil 37 sowie dem elastisch verformbaren Verbindungsmittel in Form einer Anzahl an Streben 38 in FIG 4 nochmals in räumlicher Ansicht dargestellt.

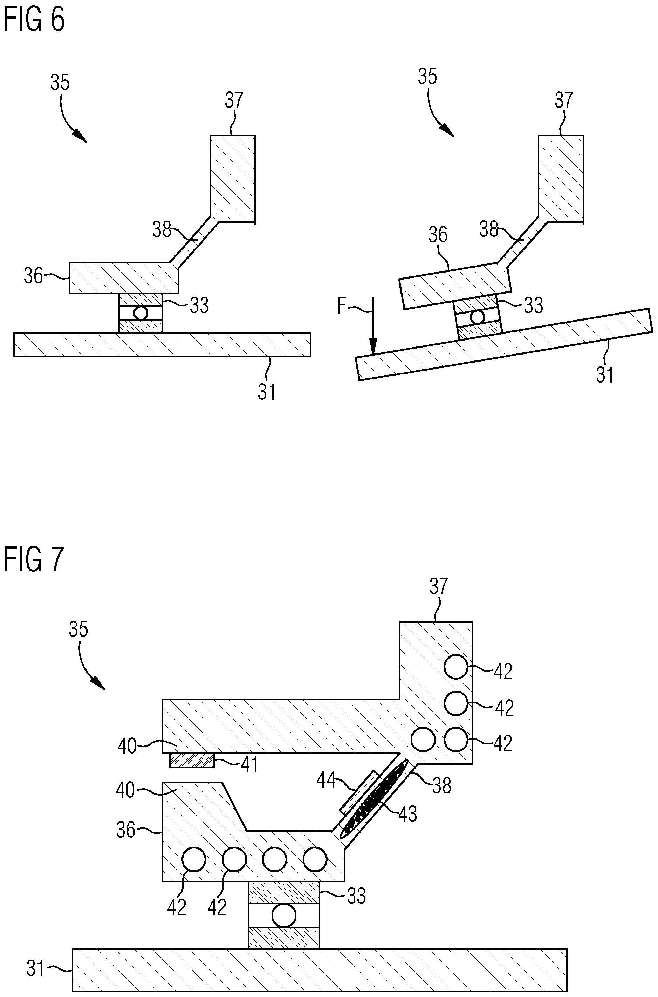

Einen wesentlichen Vorteil der Erfindung veranschaulichen die Figuren FIG 5 und FIG 6. So zeigt FIG 5 eine Verkippung der Spindelwelle 21, insbesondere in Folge einer großen äußeren Kraft F, die auf die Motorspindel und insbesondere die Spindelwelle 21 einwirkt, in Verbindung mit einem herkömmlichen Motorspindel. Beim standardmäßig massiv ausgeführten Lagerflansch 25 bewirkt eine äußere radiale Kraft F eine relative Verkippung des Innen- zum Außenringes des in Kraftfluss befindlichen Wälzlagers 23. Diese Verkippung kann zu kinematisch unsauberen Betriebsbedingungen sowie zum Abheben (lastfreier Lauf) einzelner Wälzkörper führen.

Anders hingegen bei einer erfindungsgemäßen Spindel bzw. einem erfindungsgemäßen Lagerflansch 35 gemäß FIG 6. Der erfindungsgemäß ausgeführte nachgiebige Lagerflansch 35 erlaubt beim Einwirken einer großen äußeren Kraft F durch die elastisch verformbaren Streben 38 eine elastische Verformung des Lagerflansches 35, insbesondere eine Kippbewegung des Lageraufnahmeteils 36 gegenüber dem Befestigungsteil 37, und somit ein Nachführen der Außenringe des im Kraftfluss befindlichen Wälzlagers 33, was die Verkippung im Lager reduziert.

Eine bevorzugte Ausführungsformen des erfindungsgemäßen Lagerflansches 35 zeigt FIG 7.

So kann bei einem erfindungsgemäßen Lagerflansch ein Anschlag vorhanden sein, im Ausführungsbeispiel gemäß FIG 7 in Form der Anformungen 40, die den Bewegungsspielraum der elastischen Verformung einschränken bzw. auf eine maximal möglichen Verformung begrenzen. Weiterhin kann - wie in FIG 7 gezeigt - im Bereich des Anschlags ein Dämpfungsmittel 41 vorhanden sein, z.B. ein Elastomer oder ein Squeezefilm, das insbesondere im Bereich des Maximums der elastischen Verformung eine dämpfende Wirkung bewirkt. Das Dämpfungsmittel 41 ist ebenso wie der Anschlag 40 insbesondere Ringförmig ausgebildet mit der Spindelachse als Symmetrieachse.

Ferner können bei einem erfindungsgemäßen Lagerflansch Kühlkanäle 42 vorhanden sein, die eine optimierte Lagerentwärmung ermöglichen.

Weiterhin umfasst der erfindungsgemäße Lagerflansch vorzugsweise in dem Bereich, in dem in Folge einer äußeren Kraft die größte Verformung bei dem elastisch verformbaren Verbindungsmittel, im Ausführungsbeispiel der Strebe 38, auftritt, wenigstens einen mit einem Dämpfungsmittel gefüllten Hohlraum 43, wodurch die elastische Verformung gedämpft wird. Als Dämpfungsmittel eignen sich insbesondere Pulverpartikel, die infolge der Reibung eine Dämpfung (Partikeldämpfung) bewirken.

Die genannten besonderen Merkmale des erfindungsgemäßen Lagerflansches können insbesondere dann einfach und kostengünstig verwirklicht werden, wenn der Lagerflansch in einem 3D-Druck-Verfahren hergestellt wird. Die Ausbildung der Streben, der Kühlkanäle, der Anschlagelemente mit dem Dämpfungsring und der pulvergefüllten Kammern zur Dämpfung sind so besonders einfach und insbesondere in einem Arbeitsgang möglich.

Bei der Ausführungsform der Erfindung gemäß FIG 7 weist das elastisch verformbare Verbindungsmittel in Form von Streben 38 wenigstens ein Sensorelement, insbesondere einen Dehnungsmessstreifen (DMS) 44, zum Bestimmen einer elastischen Verformung der Streben 38 auf. Vorteilhaft sind insbesondere 4 Dehnungsmessstreifen gleichmäßig, das heißt bezüglich einer Spindelachse (in FIG 7 nicht dargestellt) um ca. 90° versetzt, an dem Lagerflansch 35 angebracht, z.B. aufgeklebt. Mittels der Dehnungsmessstreifen kann die elastische Verformung der Streben 38 gemessen und damit auf die auf die Spindel einwirkende Kraft und deren Kraftrichtung sehr genau rückgeschlossen werden. Die Auswertung der Sensorsignale zum Ermitteln der auf die Spindel einwirkenden Kraft kann z.B. in der CNC-Steuerung 3 (siehe FIG 1) erfolgen. Die Kenntnis der Kraft bzw. Kraftrichtung kann in der CNC-Steuerung 3 beispielsweise dazu verwendet werden, die Bearbeitung des Werkstücks betreffende Steuerparameter, z.B. die Vorschubgeschwindigkeit, anzupassen bzw. zu optimieren. Auch viele weitere Informationen können aus der Kraft und deren Verlauf über der Zeit abgeleitet werden, z.B. ein Hinweis auf ein verschlissenes Werkzeug oder das Auftreten von Ratterschwingungen.

Die in FIG 7 in Kombination gezeigten, zusätzlichen Merkmale (Anschlagelemente 40, Dämpfungsmittel 41, Kühlkanäle 42, mit einem Dämpfungsmittel gefüllte Hohlräume 43, Dehnungsmessstreifen 44) können bei einem erfindungsgemäßen Lagerflansch auch jeweils einzeln, das heißt nicht in Kombination mit weiteren bzw. allen gezeigten Merkmalen bzw. in beliebiger Kombination vorhanden sein.

Gegenüber einem standardmäßig massiv ausgeführten Lagerflansch lässt sich durch den Einsatz einer erfindungsgemäßen Spindel bei einer Werkzeugmaschine eine deutlich höhere Zustellung (Eingriffsbreite und -tiefe) der Werkzeuge beim Fräsprozess realisieren und so die Fräsleistung bzw. die Produktivität steigern. Ratterschwingungen werden zu höheren Zustellungen verschoben. Bei der Wahl defensiver Fräsparameter zeigt sich, dass der Fräsprozess weniger anfällig gegenüber Rattern und somit insgesamt stabiler ist.

Vorteilhaft erlaubt es die die aus FIG 1 ersichtliche CNC-Steuerung 3, ggf. in Verbindung mit der externen Recheneinrichtung 5, die Bearbeitung des Werkstücks 16 mittels der Werkzeugmaschine 2 zunächst zu simulieren. Hierfür wird ein digitaler Zwilling der Werkzeugmaschine 2 verwendet. Daher ist es vorteilhaft, auch für die erfindungsgemäße Spindel 10 bzw. 30 mit einem erfindungsgemäßen Lagerflansch 35 (vgl. FIG 3 bis 7) einen digitalen Zwilling der Spindel 10, 30 bzw. des Lagerflansches 35 bereitzustellen, bei denen insbesondere auch die elastische Verformung des elastisch verformbaren Verbindungsmittels 38 zwischen dem Lageraufnahmeteil 36 und dem Befestigungsteil 37 unter Einwirkung einer (simulierten) äußeren Kraft simulierbar ist. Dadurch können auch die Eigenschaften der Spindel 10, 30 bzw. des Lagerflansches 35 mit in die Simulation einbezogen werden, wodurch diese noch genauer und realitätsnäher wird.

## Patentansprüche

1. Spindel (10, 30) insbesondere Werkzeug- und/oder Werkstückspindel, umfassend wenigstens ein Spindelgehäuse (32), ein Spindellager (33, 34) und einen Lagerflansch (35) zur Aufnahme des Spindellagers (33, 34) und zur Befestigung an dem Spindelgehäuse (32), wobei der Lagerflansch (35) wenigstens ein Lageraufnahmeteil (36) zur Aufnahme des Spindellagers (33, 34) und ein Befestigungsteil (37) zur Befestigung des Lagerflansches (35) an dem Spindelgehäuse (32) aufweist, **dadurch gekennzeichnet, dass** das Lageraufnahmeteil (36) und das Befestigungsteil (37) durch wenigstens ein elastisch verformbares Verbindungsmittel (38) elastisch miteinander verbunden sind.

2. Spindel (10, 30) nach Anspruch 1, wobei das elastisch verformbare Verbindungsmittel (38) wenigstens einen Stab und/oder eine Strebe, insbesondere eine Vielzahl an Stäben und/oder Streben umfasst oder als Stab und/oder Strebe, insbesondere als Vielzahl an Stäben und/oder Streben ausgebildet ist.

3. Spindel (10, 30) nach Anspruch 2, wobei das Lageraufnahmeteil (36) und das Befestigungsteil (37) durch mehrere Stäbe und/oder Streben miteinander verbunden sind.

4. Spindel (10, 30) nach einem der vorherigen Ansprüche, wobei das Lageraufnahmeteil (36), das Befestigungsteil (37) und das elastisch verformbare Verbindungsmittel (38) einstückig ausgebildet sind.

5. Spindel (10, 30) nach einem der vorherigen Ansprüche, wobei das elastisch verformbare Verbindungsmittel (38) um einen Winkel im Bereich von 30° bis 60°, insbesondere 45°, gegenüber einer Spindelachse (39) geneigt ist.

6. Spindel (10, 30) nach einem der vorherigen Ansprüche, wobei der Lagerflansch (35) in einem 3D-Druck-Verfahren hergestellt ist.

7. Spindel (10, 30) nach einem der vorherigen Ansprüche, wobei der Lagerflansch (35) wenigstens einen Kühlkanal (42) zur Durchleitung eines Kühlmediums aufweist.

8. Spindel (10, 30) nach einem der vorherigen Ansprüche, wobei der Lagerflansch (35), insbesondere das elastisch verformbare Verbindungsmittel (38), wenigstens einen mit einem Dämpfungsmittel füllbaren Hohlraum (43) aufweist.

9. Spindel (10, 30) nach einem der vorherigen Ansprüche, wobei der Lagerflansch (35) wenigstens ein Anschlagelement (40) zur Begrenzung einer elastischen Verformung aufweist.

10. Spindel (10, 30) nach Anspruch 9, wobei das Anschlagelement (40) ein Dämpfungselement umfasst oder mit einem Dämpfungselement (41) verbunden ist.

11. Spindel (10, 30) nach einem der vorherigen Ansprüche, wobei das elastisch verformbare Verbindungsmittel (38) wenigstens ein Sensorelement zum Bestimmen einer elastischen Verformung des elastisch verformbaren Verbindungsmittels (38) aufweist.

12. Spindel (10, 30) nach einem der vorherigen Ansprüche, wobei die Spindel (10, 30) als Motorspindel ausgebildet ist und der Lagerflansch (35) als Lagerschild der Motorspindel ausgebildet ist.

13. Lagerflansch (35) für eine Spindel (10, 30), insbesondere eine Werkzeug- oder Werkstückspindel, umfassend wenigstens ein Lageraufnahmeteil (36) zur Aufnahme des Spindellagers (33, 34) und ein Befestigungsteil (37) zur Befestigung des Lagerflansches (35) an einem Spindelgehäuse (32), **dadurch gekennzeichnet, dass** das Lageraufnahmeteil (36) und das Befestigungsteil (37) durch wenigstens ein elastisch verformbares Verbindungsmittel (38) elastisch miteinander verbunden sind.

14. Maschine, insbesondere Werkzeugmaschine (2) oder Roboter, umfassend eine Spindel (10, 30) nach einem der Ansprüche 1 bis 12.

15. Digitaler Zwilling zur Simulation einer Spindel (10, 30), insbesondere Werkzeug- und/oder Werkstückspindel, umfassend eine digitale Repräsentation wenigstens eines Spindelgehäuses (32), eines Spindellagers (33, 34) und eines Lagerflansches (35) zur Aufnahme des Spindellagers (33, 34) und zur Befestigung an dem Spindelgehäuse (32), wobei der Lagerflansch (35) wenigstens ein Lageraufnahmeteil (36) zur Aufnahme des Spindellagers (33, 34) und ein Befestigungsteil (37) zur Befestigung des Lagerflansches (35) an dem Spindelgehäuse (32) aufweist, wobei das Lageraufnahmeteil (36) und das Befestigungsteil (37) durch wenigstens ein elastisch verformbares Verbindungsmittel (38) elastisch miteinander verbunden sind, **dadurch gekennzeichnet, dass** mittels des digitalen Zwillings die elastische Verformung des elastisch verformbaren Verbindungsmittels (38) in Folge einer auf die Spindel einwirkenden äußeren Kraft simulierbar ist.
